# EUROPÄISCHE PATENTSCHRIFT

(11) **EP 0 451 685 B1**
(45) Veröffentlichungstag und Bekanntmachung des Hinweises auf die Patenterteilung: **14.02.1996**
(21) Anmeldenummer: 91105282.7
(22) Anmeldetag: 03.04.1991
(51) Int. Cl.: C08G 18/76, C08J 9/02

(54) **Verfahren zur Herstellung von Formkörpern aus Polyurethanschaumstoffen und die nach diesem Verfahren erhaltenen Formkörper**
Process for preparing moulded articles of polyurethane foams, and moulded articles of this process
Procédé de préparation d'articles moulés en mousse de polyuréthane et articles moulés obtenus par ce procédé

(30) Priorität: 13.04.1990 DE 4012005; 25.04.1990 DE 4013141
(43) Veröffentlichungstag der Anmeldung: 16.10.1991
(73) Patentinhaber: BAYER AG, D-51368 Leverkusen (DE)
(72) Erfinder: Neuhaus, Alfred, W-5090 Leverkusen 1 (DE); Avar, Géza, Dr., W-5090 Leverkusen 1 (DE); Luckas, Bruno, W-5090 Leverkusen 1 (DE); Pilger, Friedhelm, Dr., D-5000 Köln 80 (DE)

(56) Entgegenhaltungen:
- AT-B- 291 600
- DE-A- 1 806 404
- DE-A- 2 651 400
- DE-A- 3 742 122
- DE-A- 3 819 940
- GB-A- 1 147 695

## Beschreibung

Die Erfindung betrifft ein neues Verfahren zur Herstellung von Formkörpern aus Polyurethanschaumstoffen mit kompakter Oberfläche, bei welchem als Treibmittel kristallwasserhaltige Salze eingesetzt werden, und die so erhaltenen Formkörper.

Die Herstellung von Formkörpern aus Polyurethanschaumstoffen mit kompakter Oberfläche durch Formverschäumung ist grundsätzlich bekannt (z.B. DE-AS 1 196 864). Sie erfolgt durch Formverschäumung eines reaktions- und schaumfähigen Gemischs aus organischen Polyisocyanaten, Verbindungen mit gegenüber Isocyanatgruppen reaktionsfähigen Gruppen und den üblichen Hilfs- und Zusatzmitteln, wobei man in die Form eine größere Menge an reaktionsfähigem Gemisch einträgt, als zum Ausfüllen des Formvolumens durch freie Verschäumungen erforderlich wäre. Durch geeignete Wahl der Ausgangskomponenten, insbesondere durch geeignete Wahl ihres Molekulargewichts und ihrer Funktionalität ist es dabei möglich, sowohl weiche als auch halbharte als auch harte Formkörper herzustellen. Die dichte Außenhaut wird hierbei dadurch erreicht, daß man einerseits in die Form eine größere Menge an schaumfähigem Gemisch einträgt, als zum Ausfüllen des Formvolumens durch freie Verschäumung erforderlich wäre und andererseits als Treibmittel Fluorchlorkohlenwasserstoffe verwendet, die an der Forminnenwand unter den vorherrschenden Temperatur- und Druckbedingungen kondensieren, so daß die Treibreaktion an der Forminnenwand zum Stillstand kommt und eine kompakte Außenhaut entsteht.

Neben den genannten physikalischen Treibmitteln wird in der technischen Polyurethanchemie auch Wasser als chemisches Treibmittel in Form des durch Reaktion zwischen Wasser und Isocyanaten entstehenden Kohlendioxids verwendet. Mit diesem chemischen Treibmittel lassen sich zwar freigeschäumte Polyurethanschaumstoffe von ausgezeichneter Qualität herstellen, nicht jedoch qualitativ hochwertige Schaumstoff-Formkörper mit kompakter Oberfläche (Integralschaumstoffe). Dies liegt daran, daß das Kohlendioxid unter den üblichen Bedingungen an der Forminnenwand nicht kondensiert und somit die Treibwirkung in der Randzone nicht gebremst wird.

Grundsätzlich mit dem gleichen Problem behaftet und daher zur Herstellung von hochwertigen Integralschaumstoffen ungeeignet sind andere chemische oder physikalische Treibmittel, wie beispielsweise stickstoffabspaltende Treibmittel wie Azo-dicarbonamid, Azo-bis-isobutyronitril, kohlendioxidabspaltende Treibmittel wie Pyrokohlensäureester und -anhydride (US-PS 4 070 310) oder in den Reaktionskomponenten, insbesondere der Komponente mit gegenüber Isocyanatgruppen reaktionsfähigen Gruppen gelöste Treibmittel wie beispielsweise Luft.

Wie jetzt überraschend gefunden wurde, gelingt es jedoch, qualitativ hochwertige Formkörper aus Polyurethanschaumstoffen mit kompakter Oberfläche aus den üblichen Ausgangsmaterialien unter Verwendung von anorganischen oder organischen Salzen mit Kristallwasser herzustellen, wobei die Treibwirkung auf der thermisch gesteuerten und verzögerten Wasserabspaltung und anschließenden Reaktion zwischen Isocyanat und Wasser beruht, bei der Kohlendioxid freigesetzt wird.

In der DE-A-3 742 122 wird ein Verfahren zur Herstellung von Fluorkohlenwasserstoff-freien harten Polyurethanschaumstoff-Formteilen mit einer Rohdichte von mindestens 300 kg/m³ beschrieben, wobei man als Treibmittel Wasser und/oder Kohlendioxid in Kombination mit zeolithischen Adsorbentien einsetzt.

Die AT-B-291 600 offenbart ein Verfahren zur Herstellung von Polyurethanschaumstoffen mit kompakter Oberfläche, bei dem man als Treibmittel Hydrate organischer Verbindungen, welche bei Temperaturen oberhalb von 40°C das Hydratwasser abspalten, im Gemisch mit Halogenkohlenwasserstoffen verwendet.

Der Einsatz von kristallwasserhaltigen Verbindungen in Polyurethansystemen ist zwar prinzipiell beschrieben, die in den einschlägigen Veröffentlichungen vermittelte Lehre ist jedoch nicht dazu geeignet, die Verwendung von kristallwasserhaltigen Verbindungen als Treibmittel bei der Herstellung von Formschaumstoffen mit kompakter Oberfläche nahezulegen. So werden z.B. gemäß GB-PS 1 147 695 kristallwasserhaltige Salze zur Herstellung von nicht geschäumten Polyurethanpolymeren verwendet, während die DE-OS 1 806 404 die Verwendung von kristallwasserhaltigen Salzen zur Herstellung von Schaumstoffformkörpern mit besonders gleichförmigen und gleichmäßigen Eigenschaften beschreibt, also genau das Gegenteil des erfindungsgemäß angestrebten Effekts einer ungleichmäßigen Struktur, bestehend aus einem geschäumten Kern und einer kompakten Randzone. Die DE-OS 2 651 400 beschreibt schließlich die Verwendung von kristallwsasserhaltigen Verbindungen in Einkomponentensystemen, ohne jeden Bezug auf die Herstellung von Integralschaumstoffen der Art der erfindungsgemäßen Verfahrensprodukte.

Gegenstand der Erfindung ist ein Verfahren zur Herstellung von Formkörpern einer Rohdichte von mindestens 120 kg/m³ aus Polyurethanschaumstoffen mit einer kompakten Oberfläche durch Formverschäumung eines Reaktionsgemischs aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) Treibmitteln
   und gegebenenfalls
d) weiteren Hilfs- und Zusatzmitteln
   unter Einhaltung einer Isocyanatkennzahl von 75 bis 1500, dadurch gekennzeichnet, daß man als Treibmittel
c) kristallwasserhaltige Salze, die bei 20°C eine Löslichkeit in Wasser von maximal 5 g/l aufweisen, gegebenenfalls neben
   weiteren chemischen oder physikalischen Treibmitteln, verwendet.

Gegenstand der Erfindung sind auch die nach diesem Verfahren erhaltenen Formkörper.

Im Rahmen der Erfindung sind unter "Polyurethanschaumstoffen" nicht nur die bekannten, schaumförmigen, Urethangruppen aufweisenden Umsetzungsprodukte aus Polyisocyanaten und Polyhydroxylverbindungen sondern vielmehr auch andere Schaumstoffe auf Polyisocyanat-Basis wie beispielsweise Isocyanurat-modifizierte Polyurethanschaumstoffe und auch Urethangruppen-freie Polyharnstoffschaumstoffe zu verstehen, wie sie aus organischen Polyisocyanaten und organischen Polyaminen erhalten werden können. Vorzugsweise handelt es sich jedoch bei den erfindungsgemäßen Verfahrensprodukten um echte, d,h. Urethangruppen aufweisende, gegebenenfalls Isocyanurat-modifizierte Polyurethane.

Als Polyisocyanat-Komponente a) kommen beliebige aromatische Polyisocyanate mit einem NCO-Gehalt von mindestens 20 Gew.-% in Betracht. Beispiele hierfür sind 2,4-Diisocyanatotoluol, dessen technischen Gemische mit 2,6-Diisocyanatotoluol oder, bevorzugt, die bekannten Polyisocyanate oder Polyisocyanatgemische der Diphenylmethanreihe wie sie beispielsweise durch Phosgenierung von Anilin/Formaldehyd-Kondensaten und gegebenenfalls destillative Aufarbeitung der Phosgenierungsprodukte zugänglich sind. Diese für das erfindungsgemäße Verfahren besonders gut geeigneten Polyisocyanate oder Polyisocyanatgemische weisen im allgemeinen einen Gehalt an Di-socyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate, an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Reaktivkomponente b) handelt es sich um mindestens eine organische Verbindung mit mindestens zwei gegenüber Isocyanatgruppen reaktionsfähigen Gruppen. Im allgemeinen handelt es sich um Gemische von mehreren derartigen Verbindungen. Vorzugsweise handelt es sich bei den einzelnen Verbindungen der Komponente b) um die aus der Polyurethanchemie an sich bekannten organischen Polyhydroxylverbindungen.

In Betracht kommen insbesondere die an sich bekannten Polyhydroxypolyether des Molekulargewichtsbereichs 400 bis 10 000, vorzugsweise 1500 bis 6000, die pro Molekül mindestens 2, vorzugsweise 2 bis 6 Hydroxylgruppen der genannten Art aufweisen. Derartige Polyhydroxypolyether werden in an sich bekannter Weise durch Alkoxylierung von geeigneten Startermolekülen erhalten. Geeignete Startermoleküle sind beispielsweise Wasser, Propylenglykol, Glycerin, Trimethylolpropan, Sorbit, Rohrzucker, Aminoalkohole wie Ethanolamin oder Diethanolamin oder aliphatische Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Auch die an sich bekannten Modifizierungsprodukte derartiger Polyetherpolyole, d.h. die bekannten Pfropfpolyether auf Basis der beispielhaft genannten einfachen Polyetherpolyole bzw. die bekannten Polyadditionsprodukte als Füllstoffe enthaltende Polyetherpolyole, beispielsweise Polyhydrazocarbonamide als disperse Füllstoffe enthaltende Polyetherpolyole sind geeignet.

Auch die üblichen Polyesterpolyole des Molekulargewichtsbereichs 400 bis 10.000, vorzugsweise 1500 bis 4000, die pro Molekül mindestens zwei, vorzugsweise 2 bis 6 Hydroxylgruppen aufweisen, sind als Komponente b) bzw. als Teil der Komponente b) geeignet. Geeignete Polyesterpolyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure oder beliebigen Gemischen derartiger Säuren.

Auch niedermolekulare Polyhydroxylverbindungen, d.h. solche eines Molekulargewichtsbereichs von 62 bis 399 sind als Komponente b) bzw. als Teil der Komponente b) geeignet. Hierzu gehören die aus der Polyurethanchemie an sich bekannten niedermolekularen, Hydroxylgruppen aufweisenden Kettenverlängerungsmittel bzw. Vernetzer wie Alkanpolyole der bereits oben als Startermoleküle beispielhaft genannten Art oder auch niedermolekulare Polyetherpolyole, wie sie durch Alkoxylierung dieser Startermoleküle zugänglich sind.

Die Komponente b) besteht, wie bereits ausgeführt, vorzugsweise aus organischen Polyhydroxylverbindungen bzw. aus Gemischen organischer Polyhydroxylverbindungen der beispielhaft genannten Art, wobei als Komponente b) sowohl Gemische der beispielhaft genannten höhermolekularen Polyhydroxylverbindungen mit den beispielhaft genannten niedermolekularen Polyhydroxylverbindungen als auch niedermolekulare Polyhydroxylverbindungen der beispielhaft genannten Art allein in Betracht kommen.

Die Reaktivkomponente b) kann, zumindest zum Teil, auch aus Aminogruppen aufweisenden Verbindungen bestehen. Hierzu gehören sowohl Aminopolyether des Molekulargewichtsbereichs 400 bis 12.000, vorzugsweise 2000 bis 8000 mit mindestens zwei aliphatisch und/oder aromatisch gebundenen primären und/oder sekundären, vorzugsweise primären Aminogruppen als auch niedermolekulare Polyamine des Molekulargewichtsbereichs 60 bis 399.

Zu den Aminopolyethern gehören solche der in EP-B-00 81 701, US-PS 3 654 370, US-PS 3 155 728, US-PS 3 236 895, US-PS 3 808 250, US-PS 3 975 428, US-PS 4 016 143, US-PS 3 865 791 oder DE-OS 2 948 491 genannten Art. Zu den niedermolekularen Polyaminen gehören beispielsweise aliphatische Polyamine wie Ethylendiamin, 1,6-Diaminohexan oder vorzugsweise aromatische Polyamine, insbesondere alkylsubstituierte Phenylendiamine wie 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan oder beliebige Gemische derartiger Verbindungen.

Als Treibmittel c) werden erfindungsgemäß kristallwasserhaltige Salze, gegebenenfalls zusammen mit anderen an sich bekannten chemischen oder physikalischen Treibmitteln eingesetzt.

Der Begriff "kristallwasserhaltige Salze" soll im Rahmen der vorliegenden Erfindung auch Oxidhydrate oder Hydroxide von Schwermetallen umfassen. Als Treibmittel c) geeignete Salze sind kristallwasserhaltige Salze, die in Wasser bei 20°C eine unter 5 g/l liegende Löslichkeit aufweisen. Derartige Salze weisen im allgemeinen auch in den eingesetzten Polyolabmischungen die erforderliche geringe Löslichkeit auf. Bevorzugt werden Salze, die nur wenig hygroskopisch sind und sich ohne Probleme in eine für die Verarbeitung vorzuziehende feine Pulverform mahlen lassen. Vorzugsweise werden die Salze in Form von Pulvern eingesetzt, die zumindest zu 70 % ein Sieb mit der Maschenweite 100 µm passieren.

In Betracht kommen Oxidhydrate oder Hydroxide von Aluminium, Barium, Calcium, Eisen, Kupfer, Magnesium, kristallwasserhaltige Salze von anorganischen oder organischen Säuren wie Kohlensäure, Salzsäure, Schwefelsäure, Flußsäure, Borsäure, Oxalsäure, Ameisensäure, Essigsäure, Milchsäure, Benzoesäure mit Metallen wie Aluminium, Barium, Calcium, Chrom, Eisen, Kalium, Kupfer, Magnesium, Mangan, Natrium, Zink, Zinn, Zirkonium wie z.B. AlKSO₄x12H₂O, Ba(OH)₂x8H₂O, BaC₂O₄x2H₂O, CaC₄H₄O₆x4H₂O, CaC₂O₄xH₂O, CaSO₄x2H₂O, CeSO₄x4H₂O, Ce(C₂O₄)₃x10H₂O, CuSO₄x5H₂O, Na₂B₄O₇x10H₂O, NH₄MgAsO₄x6H₂O, MgCO₃x3H₂O, KHCO₃xMgCO₃x4H₂O, Al₂O₃x2SiO₂x2H₂O, 4MgCO₄xMg(OH)₂x4H₂O.

Besonders bevorzugt werden jedoch kristallwasserhaltige Salze der Phosphorsäure, Diphosphorsäure und von polymeren Phosphorsäuren eingesetzt, wie z.B. Mg₃(PO₄)₂x8H₂O, AlPO₄x3H₂O, CaHPO₄x2H₂O, Ca(H₂PO₄)₂xH₂O, Mg₃(PO₄)₂x8H₂O, Cu₂P₂O₇x3H₂O, FePO₄x2H₂O, Na₂HPO₄x12H₂O, Na₂HPO₄x2H₂O, Na₂H₂P₂O₆x6H₂O, Na₃PO₄x12H₂O, Mg(H₂PO₄)₂x4H₂O, MgHPO₄x2H₂O und insbesondere MgNH₄PO₄x 6H₂O. Das letztgenannte Magnesiumammoniumphosphat mit 6 Mol Kristallwasser ist besonders bevorzugt.

Bei der Durchführung des erfindungsgemäßen Verfahrens können die beispielhaft genannten erfindungswesentlichen kristallwasserhaltigen Salze auch in Kombination mit untergeordneten Mengen an anderen, an sich bekannten chemischen oder physikalischen Treibmitteln verwendet werden. Hierzu gehören Wasser, in den Ausgangskomponenten physikalisch gelöste Gase wie Luft, Kohlendioxid oder Stickstoff, Pyrokohlensäureester, stickstoffabspaltende Verbindungen, flüchtige Kohlenwasserstoffe oder Halogenkohlenwasserstoffe. Die Mitverwendung von derartigen weiteren Treibmitteln ist jedoch, von der oftmals nicht zu vermeidenden Mitverwendung von Wasser und eingerührter Luft abgesehen, nicht bevorzugt. Diese anderen Treibmittel machen im allgemeinen, falls sie überhaupt anwesend sind, maximal 50, vorzugsweise maximal 25 Gew.-% aller im Reaktionsgemisch vorliegenden Treibmittel aus.

Die Mitverwendung von Wasser, das nicht an Salze gebunden ist, erweist sich oftmals als vorteilhaft, weil durch eine sorgfältige Balance von gebundenem und nicht gebundenem Wasser Fließfähigkeit und Hautausbildung stufenlos eingestellt werden können. Die Menge des "freien" Wassers überschreitet aber in der Regel nicht ein Drittel der Menge des kristallin gebundenen Wassers.

Die Gesamtmenge der eingesetzten Treibmittel richtet sich selbstverständlich nach der jeweils angestrebten Dichte der Formkörper. Im allgemeinen macht das Gewicht der Komponente c) 0,1 bis 15, vorzugsweise 1 bis 10 Gew.-% des gesamten aus den Komponenten a), b), c) und d) bestehenden Reaktionsgemischs aus.

Bei den gegebenenfalls mitzuverwendenden weiteren Hilfsund Zusatzmitteln handelt es sich beispielsweise um die an sich bekannten, die Isocyanat-Polyadditionsreaktion beschleunigenden Katalysatoren wie tert. Amine wie Triethylendiamin, N,N-Dimethylbenzylamin oder N,N-Dimethylcyclohexylamin bzw. metallorganische Verbindungen, insbesondere Zinnverbindungen wie Zinn(II)-octoat oder Dibutylzinndilaurat. Auch Trimerisierungskatalysatoren wie beispielsweise Alkaliacetate wie Natrium- oder Kaliumacetat, Alkaliphenolate, wie Natriumphenolat oder Natriumtrichlorphenolat oder 2,4,6-Tris-(dimethylaminomethyl)-phenol oder auch Bleinaphthenat, Bleibenzoat oder Bleioctoat können erfindungsgemäß zum Einsatz gelangen, falls an die Herstellung von Isocyanuratgruppen aufweisenden Polyurethanschaumstoffen gedacht ist.

Weitere, gegebenenfalls mitzuverwendende Hilfs- und Zusatzstoffe d) sind beispielsweise die an sich bekannten Schaumstabilisatoren, beispielsweise jene auf Basis von Polyether-modifizierten Polysiloxanen.

Weitere, gegebenenfalls mitzuverwendende Hilfs- und Zusatzmittel d) sind innere Formtrennmittel, beispielsweise solche der in EP-B-00 81 701, US-PS 3 726 952, GB-PS 1 365 215, US-PS 4 098 731, US-PS 4 058 492, DE-OS 2 319 648, US-PS 4 033 912, US-PS 4 024 090, DE-OS 2 427 273 oder US-PS 4 098 731 beschriebenen Art.

Zur Durchführung des erfindungsgemäßen Verfahrens wird im allgemeinen so vorgegangen, daß die Ausgangskomponenten b) bis d) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemisches erfolgt die Befüllung der Form, wobei die üblichen geschlossenen Formwerkzeuge verwendet werden, und wobei die Menge des in die Form eingetragenen Reaktionsgemisches der angestrebten Rohdichte der Formkörper angepaßt wird. Die Menge des Reaktionsgemischs wird zwecks Gewährleistung der angestrebten kompakten Randzone so gewählt, daß sie frei verschäumt mindestens das 1,5-fache des Formvolumens ausfüllen würde. Neben diesem Einstufen-Verfahren kann das erfindungsgemäße Verfahren auch nach dem Semiprepolymerprinzip durchgeführt werden. Hierbei wird die Gesamtmenge der Polyisocyanatkomponente a) mit einem Teil der Komponente b), beispielsweise unter Einhaltung eines NCO/OH-Äquivalentverhältnisses von mindestens 3:1, vorzugsweise mindestens 8:1 zu einem NCO-Semiprepolymeren umgesetzt, welches anschließend mit einem Gemisch der verbleibenden Komponenten b) bis d) zur Reaktion gebracht wird. Dabei können selbstverständlich zur Herstellung der NCO-Semiprepolymeren Polyhydroxylverbindungen b) eingesetzt werden, die von den Polyhydroxylverbindungen b), die anschließend mit den NCO-Semiprepolymeren abgemischt werden, verschieden sind.

Bei allen Varianten des erfindungsgemäßen Verfahrens werden die Mengenverhältnisse der Einzelkomponenten so gewählt, daß eine Isocyanatkennzahl von 75 bis 1500, vorzugsweise 100 bis 150 vorliegt. Unter "Isocyanatkennzahl" ist hierbei der Quotient der Anzahl der Isocyanatgruppen geteilt durch die Anzahl der gegenüber Isocyanatgruppen reaktionsfähigen Gruppen multipliziert mit 100 zu verstehen. Wesentlich über 100 liegende Isocyanatkennzahlen kommen dann in Betracht, wenn unter gleichzeitiger Mitverwendung von Trimerisierungskatalysatoren die Herstellung von Isocyanurat-modifizierten Polyurethanschaumstoffen angestrebt wird. Das in den erfindungswesentlichen kristallwasserhaltigen Salzen vorliegende Wasser wird nicht in die Berechnung der Isocyanatkennzahl einbezogen.

Die Rohdichte der Formkörper liegt bei mindestens 120, vorzugsweise bei 180 bis 800 kg/m³.

Im allgemeinen beträgt die Temperatur der zur Anwendung gelangenden Formwerkzeuge mindestens 30°C, vorzugsweise mindestens 50°C. Die Innenwände der Werkzeuge können erforderlichenfalls vor der Befüllung mit an sich bekannten äußeren Formtrennmitteln beschichtet werden.

Das erfindungsgemäße Verfahren gestattet auch ohne Mitverwendung der bislang stets eingesetzten Fluorchlorkohlenwasserstoffe die Herstellung von hochwertigen Polyurethanschaumstoff-Formteilen -Formteilen einer kompakten, blasenfreien Oberfläche. Das erfindungsgemäße Verfahren eignet sich insbesondere zur Herstellung von halbharten bis harten Integralschaumstoffen mit einer kompakten Oberfläche, wie sie in der Automobil- und Möbel industrie in großem Umfang zum Einsatz gelangen.

### Beispiele

### Ausgangsmaterialien:

### Komponente a):

Polyisocyanatgemisch der Diphenylmethanreihe mit einem NCO-Gehalt von 31 Gew.-% und einem Gehalt an isomeren Diisocyanatodiphenylmethanen von 60 Gew.-%, davon 55 Gew.-% 4,4'- und ca. 5 Gew.-% 2,4'-Diisocyanatodiphenylmethan.

### Polyolkomponente b1):

Propoxylierungsprodukt von Trimethylolpropan der OH-Zahl 860.

### Polyolkomponente b2):

Propoxylierungsprodukt von Trimethylolpropan der OH-Zahl 42.

### Zusatzmittel d1 (Stabilisator):

Handelsübliches Polyethersiloxan (®Tegostab OS 50, Hersteller: Goldschmidt AG, 4300 Essen 1).

### Zusatzmittel d2 (Katalysator):

N,N-Dimethylcyclohexylamin

Die in Tabelle 1 angegebenen Polyolmischungen werden mit der ebenfalls in Tabelle 1 angegebenen Menge der Polyisocyanatkomponente a) verarbeitet.

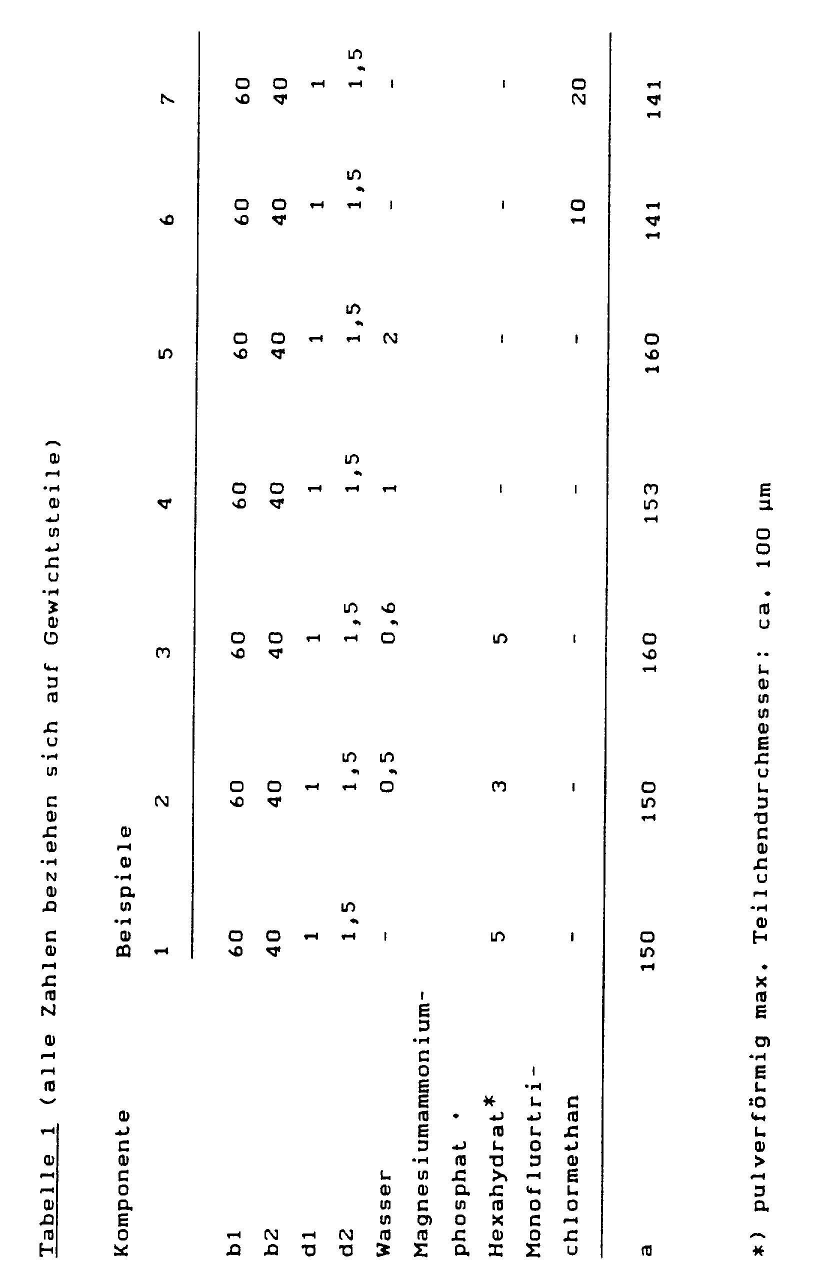

Unter Verwendung der in Tabelle 1 mitgeteilten Rezepturen wurden plattenförmige Schaumstoff-Formkörper der Rohdichte 200 bis 600 kg/m³ hergestellt (vgl. Tabelle 2). Als Formwerkzeug diente eine Plattenform der Abmessung 10 x 200 x 200 mm, deren Innenwände mit einem handelsüblichen äußeren Formtrennmittel auf Wachsbasis (®Acmosil 180, Hersteller: Acmos, D-2800 Bremen 1) beschichtet worden waren. Vor der Verarbeitung wurden die Polyolmischungen durch kurzzeitiges hochtouriges Rühren (5 Minuten, 1000 UpM, Propellerrührer) mit 10 Vol-%, bezogen auf Atmosphärendruck, feindisperser Luft beladen.

Die Herstellung der Reaktionsgemische aus den Polyolmischungen und der Polyisocyanatkomponente a) erfolgte unter Verwendung einer üblichen Rührwerksmischvorrichtung. Die Dichte der jeweiligen Formkörper wurde durch die Menge des jeweils in die Form eingetragenen Reaktionsgemisches bestimmt.

### Beispiele:

- 1, 2 und 3: Erfindungsgemäße Beispiele unter Verwendung von Kristallwasser-abspaltendem Salz als verzögert CO₂ bildendem Treibmittel.
- 4 und 5: Vergleichsbeispiel mit Wasser als CO₂ bildende Treibmittel.
- 5 und 7: Vergleichsbeispiel unter Verwendung von Monofluortrichlormethan (®Frigen R₁₁) als Treibmittel (klassischer Integralschaumstoff hoher Härte).

In der nachstehenden Tabelle 2 wird die Oberflächenhärte Shore D für die einzelnen Schaumstoff-Formkörper mitgeteilt:

**Tabelle 2**

| Rohdichte | **Beispiele** | | | | | | |
|---|---|---|---|---|---|---|---|
| (kg/m³) | 1 | 2 | 3 | 4 | 5 | 6 | 7 |
| 200 | - | - | 44 | - | 23 | - | 45 |
| 300 | 54 | 55 | - | 42 | - | 55 | - |
| 400 | 65 | 65 | - | 50 | - | 66 | - |
| 500 | 73 | 74 | - | 60 | - | 74 | - |
| 600 | 76 | 77 | - | 66 | - | 79 | - |

Die Oberflächenhärte der erfindungsgemäßen Beispiele 1, 2 und 3 liegen bei allen Rohdichten deutlich über den Vergleichsbeispielen 4 und 5. Sie liegen ähnlich den Oberflächenhärten der Wasser-frei mit Frigen R 11 als Treibmittel hergestellten Integralschäumen 6 und 7,

## Patentansprüche

1. Verfahren zur Herstellung von Formkörpern einer Rohdichte von mindestens 120 kg/m³ aus Polyurethanschaumstoffen mit einer kompakten Oberfläche durch Formverschäumung eines Reaktionsgemischs aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) Treibmitteln
und gegebenenfalls
d) weiteren Hilfs- und Zusatzmitteln
unter Einhaltung einer Isocyanatkennzahl von 75 bis 1500, dadurch gekennzeichnet, daß man als Treibmittel c) kristallwasserhaltige Salze, die bei 20°C ein Löslichkeit in Wasser von maximal 5 g/l aufweisen, gegebenenfalls neben weiteren chemischen oder physikalischen Treibmitteln, verwendet.

2. Verfahren gemäß Anspruch 1, dadurch gekennzeichnet, daß man als kristallwasserhaltiges Salz c) Magnesiumammoniumphosphat mit 6 Mol Kristallwassser verwendet.

3. Gemäß Anspruch 1 bis 2 erhaltene Formkörper.

## Claims

1. A process for the production of moulded articles with a gross density of at least 120 kg/m³ from polyurethane foams of compact surface by the foam moulding of a reaction mixture of
a) a polyisocyanate component consisting of at least one aromatic polyisocyanate,
b) a reactive component consisting of at least one organic compound having at least two groups reactive towards isocyanate groups,
c) blowing agents
and optionally
d) other auxiliaries and additives,
under conditions which maintain an isocyanate index of 75 to 1500, characterized in that the blowing agents c) used are salts containing water of crystallization which have a solubility in water of at most 5 g/l at 20°C, optionally together with other chemical or physical blowing agents.

2. A process according to Claim 1, characterized in that magnesium ammonium phosphate with 6 mol of water of crystallization is used as the salt c) containing water of crystallization.

3. Moulded articles obtained according to Claim 1 or 2.

## Revendications

1. Procédé de préparation d'articles moulés d'une masse volumique apparente d'au moins 120 kg/m³ à partir de mousse de polyuréthanne ayant une surface compacte par moussage in situ d'un mélange réactionnel à partir de
a) une composante de polyisocyanate, composée d'au moins un polyisocyanate aromatique;
b) une composante réactive, composée d'au moins un composé organique comportant au moins deux groupes réagissant aux radicaux isocyanate;
c) des agents porogènes
et éventuellement
d) d'autres adjuvants et additifs
en maintenant un indice d'isocyanate de 75 à 1 500, caractérisé en ce que des sels contenant de l'eau de cristallisation qui présentent à 20 °C une solubilité dans l'eau de maximum 5 g/l, sont mis en oeuvre comme agent porogène c), éventuellement en plus d'autres agents porogènes chimiques ou physiques.

2. Procédé selon la revendication 1, caractérisé en ce que du phosphate ammoniacomagnésien comportant 6 moles d'eau de cristallisation est mis en oeuvre comme sel contenant de l'eau de cristallisation.

3. Articles moulés obtenus conformément aux revendications 1 à 2.
